(19) Europäisches Patentamt
European Patent Office
Office européen des brevets

(11) Numéro de publication: **0 497 660 B1**

(12) **FASCICULE DE BREVET EUROPEEN**

(45) Date de publication de fascicule du brevet: **08.03.95**  (51) Int. Cl.⁶: **B64C 13/16**, G05D 1/00

(21) Numéro de dépôt: **92400172.0**

(22) Date de dépôt: **22.01.92**

(54) **Système permettant d'améliorer le comportement en flottement d'un aéronef.**

(30) Priorité: **29.01.91 FR 9100975**

(43) Date de publication de la demande:
**05.08.92 Bulletin  92/32**

(45) Mention de la délivrance du brevet:
**08.03.95 Bulletin  95/10**

(84) Etats contractants désignés:
**DE GB IT NL**

(56) Documents cités:
**EP-A- 0 101 384
EP-A- 0 293 018
WO-A-87/02964
FR-A- 2 298 132
US-A- 3 902 686**

**ADVISORY GROUP FOR AEROSPACE RE-
SEARCH AND DEVELOPMENT (AGARD) 17
Octobre 1974,PARIS pages 2301 - 2317; G.C.
COHEN ET AL.: 'IMPACT OF ACTIVE
CONTROL TECHNOLOGY ON AIRPLANE DES-
IGN'**

**JOURNAL OF GUIDANCE AND CONTROL
AND DYNAMICS vol. 12, no. 2, Mars 1989,
NEW YORK,US pages 147 - 154; B. WIE ET
AL.: 'NEW GENERALIZED STRUCTURAL TIL-**

**TERING CONCEPT FOR ACTIVE VIBRATION
CONTROL SYNTHESIS'**

(73) Titulaire: **AEROSPATIALE SOCIETE NATIONA-
LE INDUSTRIELLE Société Anonyme dite:
37, Boulevard de Montmorency
F-75016 Paris (FR)**

(72) Inventeur: **Lacabanne, Michel
21, rue Taparot
F-31650 Saint-Orens (FR)**

(74) Mandataire: **Bonnetat, Christian
CABINET BONNETAT
23, Rue de St.Pétersbourg
F-75008 Paris (FR)**

EP 0 497 660 B1

**Description**

La présente invention concerne un système permettant d'améliorer le comportement en flottement d'un aéronef.

On sait que le flottement est l'apparition d'une instabilité dynamique de l'aéronef au-delà d'une certaine vitesse, dite vitesse critique de flottement. Le phénomène de flottement est lié au couplage entre les modes de déformation propres de la structure de l'aéronef (fréquences de résonance) et les forces aérodynamiques instationnaires engendrées par les mouvements de la structure. Les vibrations aéroélastiques instables constituant le flottement entraînent toujours l'inconfort des passagers de l'aéronef et peuvent conduire à la destruction, partielle ou totale, de ce dernier.

Pour remédier au flottement, les constructeurs d'aéronef ont généralement recours à des moyens passifs, qui consistent essentiellement à apporter des modifications à la géométrie ou à la rigidité de la structure de l'aéronef, ou bien encore aux masses emportées par celui-ci, par exemple les masses de carburant. Ces constructeurs peuvent également mettre en oeuvre des moyens actifs, constitués d'un système qui comporte des accéléromètres qui détectent les modes de déformation de l'aéronef et qui commandent, par l'intermédiaire d'une logique à base de filtres, des surfaces aérodynamiques commandables de l'aéronef, de façon à ce que ces surfaces aérodynamiques engendrent des forces s'opposant aux effets du flottement. Un tel système est par exemple décrit dans le brevet américain US-A-3 902 686 ou dans le document WO-87/02964.

Bien entendu, sur l'aéronef, les accéléromètres de détection sont disposés sur la partie la plus sensible au mode de déformation que l'on veut contrôler. Par exemple, on sait que, sur les avions civils longs courriers, notamment quadriréacteurs, c'est la partie arrière du fuselage qui oscille (flexion latérale du fuselage arrière) sous l'effet des turbulences : aussi, dans ce cas, lesdits accéléromètres sont-ils disposés dans la partie arrière de l'aéronef, comme cela est décrit dans le compte-rendu de la Conférence n° 157 de l'Advisory Group for Aerospace Research and Development (AGARD), tenue du 14 au 17 octobre 1974 à Paris sur le thème "Impact of Active Control Technology on Airplane Design" par Gerald C. Cohen et Richard L. Schoenman.

Par ailleurs, les surfaces aérodynamiques commandables destinées à engendrer les forces contrecarrant les vibrations aéroélastiques peuvent, suivant les cas, être prévues spécialement sur l'aéronef, comme cela est décrit dans le brevet américain précité US-A-3 902 686, ou bien être des surfaces aérodynamiques usuelles de l'aéronef. C'est ainsi que, dans le compte-rendu de la Conférence AGARD n° 157 précitée, on utilise la gouverne de direction pour s'opposer aux accélérations latérales.

De plus, de façon évidente, de tels moyens actifs prennent en compte la vitesse de l'aéronef, comme cela est montré dans le document AGARD précité, ou bien encore dans le brevet français FR-A-2 298 132.

La présente invention a pour objet un système du type décrit dans le compte-rendu de la Conférence AGARD précitée, prévu pour améliorer le comportement en flottement d'un aéronef, notamment dans le cas d'un couplage aéroélastique entre la flexion latérale du fuselage arrière et le premier mode de flexion antisymétrique de voilure et assurer, même dans ce cas, une stabilité aéroélastique satisfaisante.

Un système selon les termes du préambule de la revendication 1 est décrit dans le document EP-A-0 293 018 A cet effet, selon l'invention, le système permettant d'améliorer le comportement en flottement d'un aéronef, pourvu d'une voilure fixe et d'une gouverne de direction, qui est actionnée par des moyens de commande recevant un signal de pilotage en lacet, ledit système comportant :

- un accéléromètre, disposé dans la partie arrière dudit aéronef, pour détecter les accélérations dues à la flexion latérale alternative de celle-ci et engendrer un signal représentatif desdites accélérations latérales ;
- des moyens de filtrage, recevant ledit signal représentatif desdites accélérations latérales et engendrant un signal de correction de commande de ladite gouverne de direction, signal de correction qui dépend de la vitesse dudit aéronef et qui est destiné à l'amortissement de ladite flexion latérale alternative, lesdits moyens de filtrage comprenant :
  . un premier filtre qui reçoit ledit signal représentatif desdites accélérations latérales, engendré par ledit accéléromètre ;
  . un second filtre d'adaptation de phase, qui reçoit le signal issu dudit premier filtre ;
  . un amplificateur à gain variable, amplifiant le signal issu dudit second filtre d'adaptation de phase, le gain dudit amplificateur étant une fonction décroissante de la vitesse aérodynamique dudit aéronef ; et
- des moyens pour additionner ledit signal de correction audit signal de pilotage ;
est caractérisé :

- en ce que ledit premier filtre est du type passebande dont la bande passante est centrée autour de la fréquence de la flexion latérale alternative de ladite partie arrière ;
- en ce que lesdits moyens de filtrage comportent un commutateur transmettant auxdits moyens d'addition le signal amplifié par ledit amplificateur, lorsque ladite vitesse aérodynamique de l'aéronef est supérieure à un premier seuil de vitesse auquel risque de se produire un couplage aéroélastique entre ladite flexion alternative de ladite partie arrière dudit aéronef et le premier mode de flexion antisymétrique de la voilure de celui-ci ; et
- en ce que ledit filtre d'adaptation de phase est tel que ledit signal amplifié par ledit amplificateur est, après passage dans lesdits moyens de commande de ladite gouverne de direction, retardé de 90° par rapport audit signal représentatif desdites accélérations latérales, engendré par ledit accéléromètre.

On voit qu'ainsi l'action de la gouverne de direction est particulièrement efficace, puisqu'elle se produit en quadrature de phase par rapport à la flexion latérale alternative de la partie arrière du fuselage.

La fonction de transfert dudit filtre d'adaptation de phase peut être du type $1+c_1.p/1+c_2.p$, $p$ étant la variable de la transformation de Laplace et $c_1$ et $c_2$ étant des constantes. Bien entendu, les valeurs des constantes $c_1$ et $c_2$ dépendent des caractéristiques physiques de l'aéronef et doivent être déterminées pour chaque aéronef particulier.

Par ailleurs, la fonction de transfert dudit filtre passe-bande peut être du type

$$\frac{a_0+a_1.p+a_2.p^2+a_3.p^3+\ldots+a_{n-1}.p^{n-1}}{b_0+b_1.p+b_2.p^2+b_3.p^3+\ldots+b_n.p^n}$$

$p$ étant la variable de la transformation de Laplace et $a_0$, $a_1$, ..., $a_{n-1}$, $b_0$, $b_1$, ..., $b_n$ étant des constantes. Cependant, cette dernière fonction de transfert peut bien souvent être simplifiée en choisissant $a_0=0$, $b_0=1$, $b_3=b_4=\ldots=b_n=0$, $a_2=a_3=\ldots=a_{n-1}=0$, $a_1=b_1$ et $b_2=a_1^2$, de sorte qu'elle devient $a_1.p/1+a_1.p+a_1^2.p^2$. Là encore, les valeurs des constantes dépendent des caractéristiques physiques de l'aéronef.

Il est évident que le déphasage entre le signal délivré par l'accéléromètre et le braquage de la gouverne de direction dépend non seulement du filtre d'adaptation de phase, mais encore du filtre passe-bande et des caractéristiques dynamiques de la commande de direction. Ainsi, pour obtenir un déphasage de -90°, il est nécessaire que les constantes de ces deux filtres soient choisies en prenant en compte toute la chaîne entre l'accéléromètre et la gouverne de direction. Par exemple, pour un avion de type quadriréacteur, on peut choisir $c_1=0,11$, $c_2=0,037$ et $a_1=0,0637$.

Afin d'affiner la fonction d'amortissement du système conforme à la présente invention, le gain dudit amplificateur est une fonction décroissante, non seulement de ladite vitesse aérodynamique, mais encore du nombre de Mach et de l'accélération mesurée sur le fuselage arrière dudit aéronef.

Avantageusement, également à des fins d'optimisation de la fonction du système de l'invention, ledit commutateur transmet auxdits moyens d'addition le signal amplifié par ledit amplificateur, lorsque, à la fois, ladite vitesse aérodynamique et le nombre de Mach de l'aéronef, sont respectivement supérieurs audit premier seuil de vitesse et à un second seuil de nombre de Mach, auquel risque de se produire un couplage aéroélastique entre ladite flexion alternative de ladite partie arrière dudit aéronef et le premier mode de flexion antisymétrique de la voilure de celui-ci.

Le système conforme à la présente invention peut être de type numérique et être incorporé, à l'exception de l'accéléromètre, au système de calculateurs de commande de vol de l'aéronef.

L'accéléromètre étant de type analogique, il est avantageux de prévoir un filtre anti-repliement (anti-aliasing) entre ledit accéléromètre et ledit filtre passe-bande, un convertisseur analogique-numérique étant alors disposé entre ledit filtre anti-repliement et ledit filtre passe-bande.

Avantageusement, la fonction de transfert du filtre anti-repliement est du type $d_0/d_0+d_1.p+p^2$. Pour l'exemple d'avion quadriréacteur mentionné ci-dessus, $d_0$ et $d_1$ peuvent respectivement être choisis égaux à 3948 et à 89.

A des fins de sécurité, le système peut comporter plusieurs accéléromètres en parallèle, disposés proches l'un de l'autre dans ladite partie arrière de l'aéronef et engendrant chacun un signal représentatif desdites accélérations latérales, lesdits signaux issus desdits accéléromètres étant adressés à un voteur, dont la sortie est reliée audit filtre passe-bande. Par exemple, lesdits accéléromètres sont disposés l'un au-dessous de l'autre sur un cadre du fuselage.

Par ailleurs, pour limiter l'action du système conforme à l'invention par rapport au signal de pilotage en lacet, il est avantageux de prévoir un dispositif de saturation pour limiter le signal amplifié, issu dudit amplificateur à gain variable. Ce dispositif de saturation peut être tel que l'amplitude maximale de braquage de la gouverne de direction, commandée par le système de l'invention, soit égale à 2,5°.

Les figures du dessin annexé feront bien comprendre comment l'invention peut être réalisée. Sur ces figures, des références identiques désignent des éléments semblables.

La figure 1 montre schématiquement, au sol, un avion long courrier quadriréacteur, équipé du système conforme à la présente invention.

La figure 2 est le schéma synoptique du système conforme à la présente invention.

La figure 3 illustre le premier mode de flexion antisymétrique de voilure, se produisant pendant le vol de l'avion de la figure 1.

Les figures 4 et 5 sont des diagrammes illustrant la fonction de transfert du système conforme à la présente invention.

La figure 6 est un diagramme illustrant l'effet du système conforme à la présente invention sur la stabilité de l'avion des figures 1 et 3.

La figure 7 illustre une variante de réalisation du système conforme à la présente invention.

La figure 8 montre schématiquement l'implantation sur l'avion des accéléromètres du système de la figure 7.

La figure 9 est une vue selon la flèche IX de la figure 8.

La figure 10 est une vue en coupe selon la ligne X-X de la figure 9.

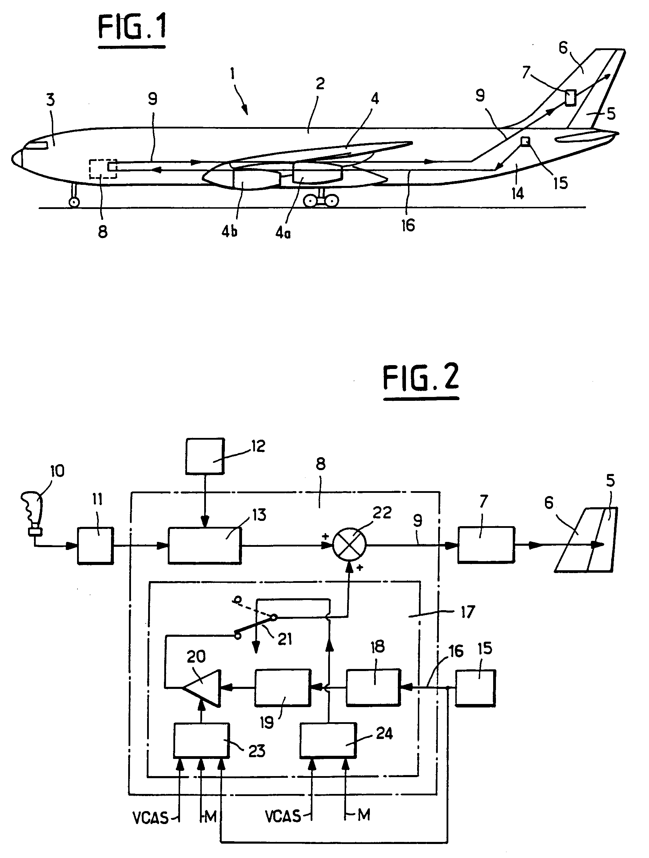

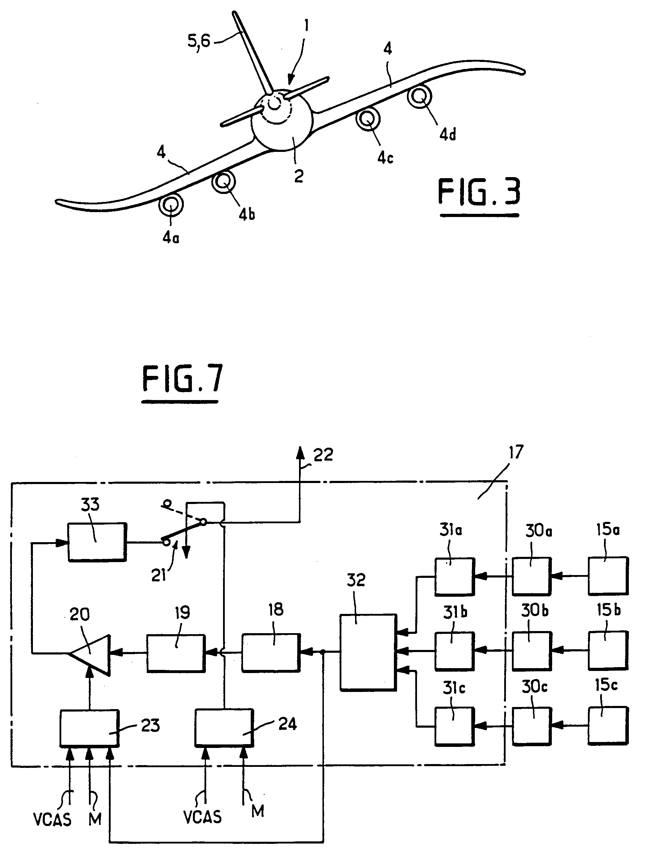

L'avion 1, montré schématiquement par la figure 1, est du type long courrier quadriréacteur et il comporte, entre autres, un fuselage 2, dans la partie avant duquel est ménagée une cabine de pilotage 3, des ailes fixes 4 supportant les quatre réacteurs 4a à 4d (voir également la figure 3) et une gouverne de direction 5, articulée sur un empennage vertical 6. La gouverne de direction 5 est actionnée par des moyens de commande en lacet 7, par exemple du type servo-moteurs et servo-commandes.

L'avion est piloté par l'intermédiaire d'au moins un calculateur de commande de vol 8, par exemple disposé en soute, à l'arrière de la cabine de pilotage 3. Le calculateur de commande de vol 8 est relié aux moyens de commande en lacet 7, par une liaison 9.

Comme cela est illustré par le schéma synoptique de la figure 2, le calculateur de commande de vol 8 reçoit les ordres de commande en lacet, soit d'un organe d'actionnement volontaire 10, par exemple du type minimanche, placé dans la cabine 3 à la disposition du pilote et associé à un transducteur 11 délivrant un signal électrique représentatif de la rotation dudit organe 10, soit de l'autopilote 12 de l'avion 1. Un dispositif 13 élabore, à partir des ordres reçus du transducteur 11 ou de l'autopilote 12, l'ordre de commande en lacet adressé aux moyens de commande 7 par l'intermédiaire de la liaison 9.

Lorsque l'avion 1 est en vol, de façon connue, sa partie arrière 14 est soumise à des mouvements de flexion latéraux alternatifs de basse fréquence (quelques Hz). De plus, les ailes 4 sont soumises à des mouvements de flexion de basse fréquence, notamment selon le mode dit "premier mode de flexion antisymétrique de voilure", pour lequel une aile 4 est alternativement fléchie vers le bas et vers le haut, tandis que l'autre aile 4 est fléchie alternativement vers le haut et vers le bas. Ce premier mode de flexion antisymétrique est illustré, de l'arrière, sur la figure 3.

Au-delà d'une certaine vitesse aérodynamique de l'avion 1, il peut y avoir couplage, par les vibrations aéroélastiques, entre la flexion latérale alternative de la partie arrière 14 du fuselage 2 et la flexion alternative antisymétrique des ailes 4. Il peut alors en résulter la destruction, partielle ou totale, de l'avion 1.

Comme cela a été expliqué ci-dessus, l'objet de la présente invention est précisément d'éviter un tel couplage.

Pour ce faire, dans la partie arrière 14 du fuselage 2, est prévu au moins un accéléromètre 15, mesurant les accélérations latérales de ladite partie arrière 14 du fuselage 2 et adressant au calculateur de commande de vol 8, par l'intermédiaire d'une liaison 16, un signal représentatif desdites accélérations latérales.

Le calculateur de commande de vol 8, conformément à la présente invention, comporte de plus un ensemble de filtrage 17, comportant un filtre passe-bande 18, un filtre d'adaptation de phase 19, un amplificateur 20 et un commutateur 21. De plus, un additionneur 22 est disposé sur la liaison 9, entre le dispositif 13 d'élaboration d'ordre de lacet et la servocommande 7. Il permet d'additionner le signal provenant de l'ensemble de filtrage 17 à celui provenant du dispositif 13 et d'adresser aux moyens de commande 7 la somme desdits signaux.

Le filtre passe-bande 18 permet de délimiter le champ des fréquences surveillées et il élimine les fréquences de structure qui ne sont pas centrées autour de la fréquence que l'on contrôle. Par exemple, si la fréquence en flexion de la partie arrière 14 du fuselage, à laquelle risque de se produire un couplage aéroélastique avec le premier mode de flexion antisymétrique de voilure, est égale à 2,5 Hz, le filtre passe-bande 18 est prévu pour laisser passer la bande de fréquences 1 Hz - 4 Hz. Si $\underline{p}$ désigne, comme cela est usuel, la variable de la transformation de Laplace, la fonction de transfert du filtre 18 peut être du type

$$\frac{ao+a1.p+a2.p^2+a3.p^3+...+an\text{-}1.p^{n-1}}{bo+b1.p+b2.p^2+b3.p^3+...+bn.p^n}$$

expression dans laquelle ao, a1, ..., an-1, et bo, b1, b2, b3, ..., bn sont des constantes.

Dans un mode de réalisation particulier, appliqué sur quadriréacteur, la fonction de transfert du filtre passe-bande 18 a été choisie égale à

$a1.p/1 + b1.p + b2.p^2$,

c'est-à-dire que dans ce cas,

$ao = 0$, $bo = 1$, $a2 = a3 = ... = an\text{-}1 = 0$ et $b3 = b4 = ... = bn = 0$.

De plus, on a choisi

$a1 = b1 = 0,0637$ et $b2 = 0,0637^2 = 0,00406$.

Le filtre d'adaptation de phase 19, quant à lui, peut avoir une fonction de transfert du type $1 + c1.p/1 + c2.p$. Dans l'exemple pratique mentionné ci-dessus, c1 et c2 sont respectivement choisis égaux à 0,11 et à 0,037.

L'amplificateur 20 est du type à gain variable. Le gain dudit amplificateur 20 est commandé par un dispositif de calcul 23. Le dispositif de calcul 23 reçoit des signaux respectivement représentatifs de la vitesse aérodynamique VCAS, du nombre de Mach M et de l'accélération latérale du fuselage arrière de l'avion 1. Ces deux premiers signaux sont délivrés par des capteurs ou calculateurs, usuellement montés à bord de l'avion 1 et non représentés. Le troisième signal provient de l'accéléromètre 15. Le dispositif de calcul 23 impose à l'amplificateur 20 un gain décroissant en fonction de la vitesse aérodynamique VCAS, du nombre de Mach M et de l'accélération latérale du fuselage arrière. On remarquera que le gain de l'amplificateur 20 prend en compte l'altitude de l'avion 1, par l'intermédiaire du nombre de Mach M.

Le commutateur 21 est commandé par un dispositif de comparaison 24, qui reçoit desdits capteurs ou calculateurs respectifs, la vitesse aérodynamique VCAS et le nombre de Mach M. Si la vitesse aérodynamique VCAS et si le nombre de Mach M sont supérieurs à des seuils respectifs, pour lesquels le couplage aéroélastique entre la flexion latérale arrière du fuselage et la flexion antisymétrique de voilure risque de se produire, le dispositif de comparaison 24 oblige le commutateur 21 à prendre sa position pour laquelle il relie la sortie de l'amplificateur 20 à l'additionneur 22. En revanche, si la vitesse aérodynamique VCAS et si le nombre de Mach M sont inférieurs auxdits seuils, le dispositif de comparaison 24 impose audit commutateur 21 de prendre sa position pour laquelle il isole la sortie de l'amplificateur 20 de l'additionneur 22.

Ainsi, le signal d'accélération latérale mesuré par l'accéléromètre 15, filtré par les filtres 18 et 19 et amplifié par l'amplificateur 20, forme un signal de correction, qui est superposé au signal de commande en lacet provenant du dispositif 13, quand le commutateur 21 est dans sa position appropriée. Ce signal de correction commande, à travers les moyens de commande 7, la gouverne de direction 5 pour contrecarrer la flexion latérale de la partie arrière 14 du fuselage 2.

Selon une particularité importante de la présente invention, la fonction de transfert du filtre d'adaptation de phase 19 est choisie, en fonction de la fonction de transfert du filtre passe-bande 18 et de la fonction de transfert des moyens de commande 7, pour que, à la sortie desdits moyens de commande 7, le braquage appliqué à la gouverne de direction 5 soit déphasé de -90° par rapport au signal d'accélération mesuré par l'accéléromètre 15 à la fréquence du mode de flexion du fuselage. Grâce à cette particularité, le braquage de la gouverne de direction 5 est particulièrement efficace pour amortir la flexion latérale alternative de la partie arrière du fuselage, puisqu'il est retardé de 90° par rapport à l'accélération mesurée sur la fréquence de cette flexion latérale alternative.

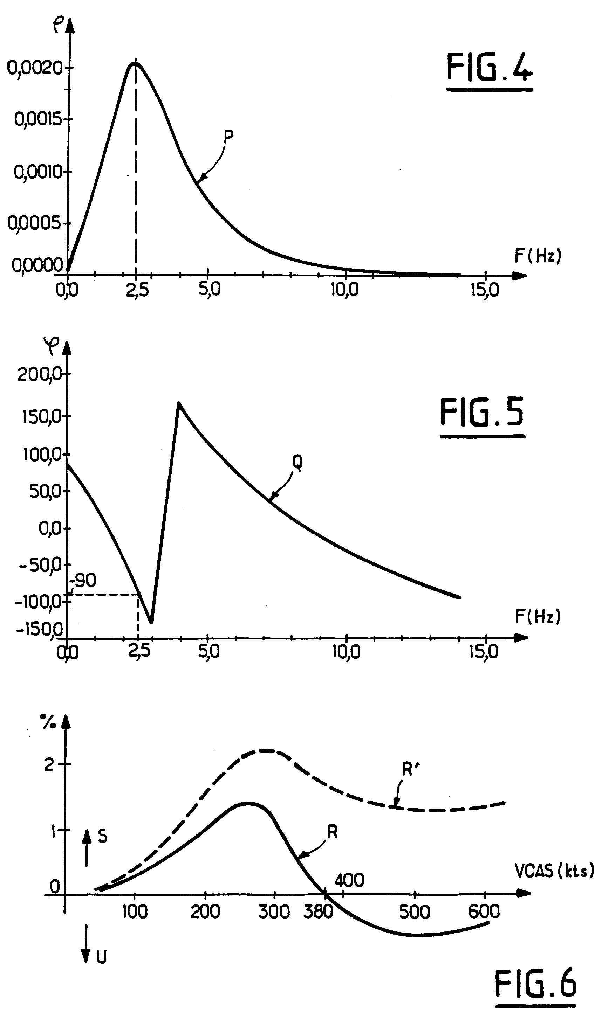

Sur les figures 4 et 5, on a représenté, en fonction de la fréquence F (en Hz), respectivement le module $\rho$ et la phase $\phi$ de la fonction de transfert globale des filtres 18 et 19, de l'amplificateur 20 et des moyens de commande 7. On peut y voir que le module $\rho$ est maximal à la fréquence (2,5 Hz) du mode de flexion latérale du fuselage arrière et que, à cette dernière fréquence, ladite phase $\phi$ est égale à -90°, c'est-à-dire que le déphasage entre le signal de mesure issu de l'accéléromètre 15 et le braquage de la gouverne de direction 5 est de -90°.

Par ailleurs, sur la figure 6, on a représenté, en fonction de la vitesse aérodynamique VCAS (en kts), l'amortissement du mode de flexion latérale du fuselage arrière (en % de l'amortissement critique, c'est-à-dire de l'amortissement pour lequel le retour à la position d'équilibre est apériodique). On peut y voir (courbe R) que, sans le système de filtrage 17 de l'invention, au-delà de la vitesse critique de flottement, la flexion latérale du fuselage arrière passe du domaine stable (S) au domaine instable (U), alors que (courbe R'), avec le système de filtrage 17 de l'invention, la flexion latérale du fuselage arrière reste dans le domaine stable (S) pour toutes les vitesses. Ainsi, le système conforme à l'invention fait disparaître la vitesse critique de flottement, et augmente l'amortissement du mode de flexion latérale du fuselage arrière dans tout le domaine de vitesses considérées.

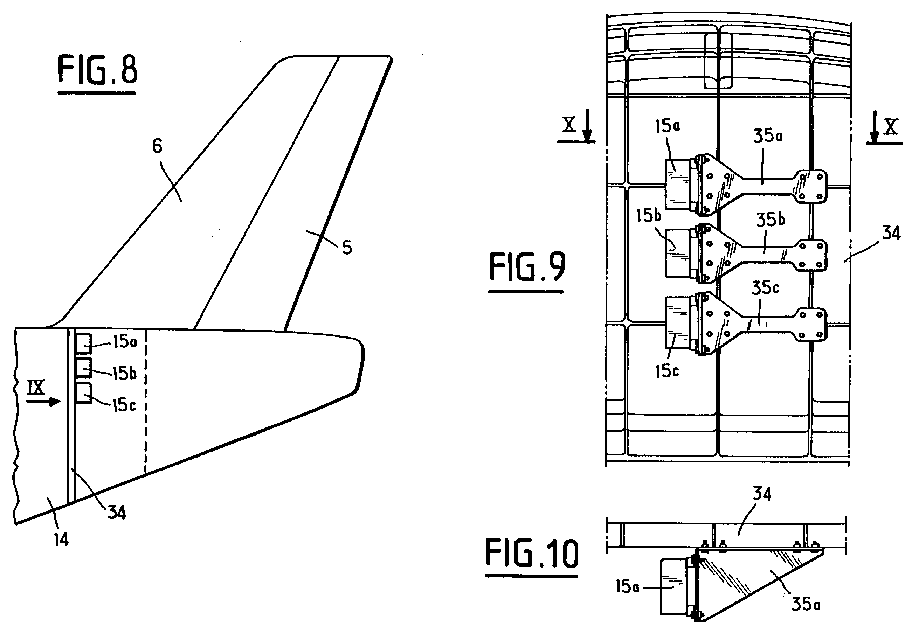

Dans le mode de réalisation illustré sur la figure 2, on a supposé que l'accéléromètre 15 était unique. En revanche, la variante de réalisation montrée par la figure 7 comporte, à des fins de sécurité, trois accéléromètres 15a, 15b et 15c, de type analogique. Les signaux de mesure desdits accéléromètres sont respectivement transmis à des filtres anti-repliement (anti-aliasing) 30a, 30b et 30c, puis, après filtrage, à des convertisseurs analogique-numérique 31a, 31b et 31c. Ensuite, lesdits signaux sont adressés à un voteur 32, dont la sortie attaque le filtre passe-bande 18. Le voteur 32 fournit au filtre 18 et au calculateur 23, soit le signal qui est le plus probable, soit le signal qui est compris entre les deux autres, ou bien encore une combinaison des signaux provenant des accéléromètres 15a, 15b, 15c.

De plus, dans la variante de réalisation de la figure 7, un dispositif de saturation 33 est disposé entre l'amplificateur 20 et le commutateur 21. Par exemple, le dispositif de saturation 33 limite à 2,5° l'ordre de correction de commande en lacet, engendré à partir des accéléromètres 15a, 15b et 15c, par les filtres 18 et 19.

Comme cela est représenté sur la figure 7, les convertisseurs analogique-numérique 31a, 31b et 31c, le voteur 32 et le dispositif de saturation 33 peuvent être incorporés à l'ensemble de filtrage 17.

Les figures 8 et 10 illustrent la façon dont les accéléromètres 15a, 15b et 15c sont disposés dans la partie arrière 14 du fuselage 2. Ces accéléromètres sont fixés, l'un en dessous de l'autre sur un cadre 34 dudit fuselage, par l'intermédiaire d'équerres de fixation, portant respectivement les références 35a, 35b et 35c et proches l'une de l'autre. Ainsi, lesdits filtres 15a, 15b et 15c mesurent les mêmes accélérations transversales à l'axe longitudinal de l'avion 1, dans la mesure où il n'y a pas de torsion du fuselage arrière.

**Revendications**

1. Système permettant d'améliorer le comportement en flottement d'un aéronef (1), pourvu d'une voilure fixe (4) et d'une gouverne de direction (5), qui est actionnée par des moyens (7) de commande recevant un signal de pilotage en lacet, ledit système comportant :
    - un accéléromètre (15), disposé dans la partie arrière (14) dudit aéronef, pour détecter les accélérations dues à la flexion latérale alternative de celle-ci et engendrer un signal représentatif desdites accélérations latérales ;
    - des moyens de filtrage (17), recevant ledit signal représentatif desdites accélérations latérales et engendrant un signal de correction de commande de ladite gouverne de direction, signal de correction qui dépend de la vitesse dudit aéronef et qui est destiné à l'amortissement de ladite flexion latérale alternative, lesdits moyens de filtrage (17) comprenant :
        . un premier filtre (18) qui reçoit ledit signal représentatif desdites accélérations latérales, engendré par ledit accéléromètre (15) ;
        . un second filtre d'adaptation de phase (19), qui reçoit le signal issu dudit premier filtre (18) ;
        . un amplificateur (20) à gain variable, amplifiant le signal issu dudit second filtre d'adaptation de phase (19), le gain dudit amplificateur (20) étant une fonction décroissante de la vitesse aérodynamique (VCAS) dudit aéronef ; et
    - des moyens (22) pour additionner ledit signal de correction audit signal de pilotage ; caractérisé :
    - en ce que ledit premier filtre (18) est du type passebande dont la bande passante est centrée autour de la fréquence de la flexion latérale alternative de ladite partie arrière (14) ;
    - en ce que lesdits moyens de filtrage (17) comportent un commutateur (21) transmettant auxdits moyens d'addition (22) le signal amplifié par ledit amplificateur (20), lorsque ladite vitesse aérodynamique (VCAS) de l'aéronef est supérieure à un premier seuil de vitesse auquel risque de se produire un couplage aéroélastique entre ladite flexion alternative de ladite partie arrière (14) dudit aéronef et le premier mode de flexion antisymétrique de la voilure (4) de celui-ci ; et

- en ce que ledit filtre d'adaptation de phase (19) est tel que ledit signal amplifié par ledit amplificateur (20) est, après passage dans lesdits moyens de commande (7) de ladite gouverne de direction (5), retardé de 90° par rapport audit signal représentatif desdites accélérations latérales, engendré par ledit accéléromètre (15).

2. Système selon la revendication 1,
caractérisé en ce que le gain dudit amplificateur (20) est une fonction décroissante, non seulement de ladite vitesse aérodynamique (VCAS), mais encore du nombre de Mach (M) et de l'accélération latérale du fuselage arrière dudit aéronef (1).

3. Système selon l'une des revendications 1 ou 2,
caractérisé en ce que ledit commutateur (21) transmet auxdits moyens d'addition (22) le signal amplifié par ledit amplificateur (20), lorsque, à la fois, ladite vitesse aérodynamique (VCAS) et le nombre de Mach (M) de l'aéronef, sont respectivement supérieurs audit premier seuil de vitesse et à un second seuil de nombre de Mach, auquel risque de se produire un couplage aéroélastique entre ladite flexion alternative de ladite partie arrière (14) dudit aéronef et le premier mode de flexion antisymétrique de la voilure (4) de celui-ci.

4. Système selon l'une quelconque des revendications 1 à 3,
caractérisé en ce que l'accéléromètre est de type analogique et en ce qu'un filtre anti-repliement (30a, 30b,30c) est disposé entre ledit accéléromètre et ledit filtre passe-bande (18).

5. Système selon la revendication 4 ,
caractérisé en ce qu'un convertisseur analogique-numérique (31a,31b,31c) est disposé entre ledit filtre anti-repliement et ledit filtre passe-bande (18).

6. Système selon l'une quelconque des revendications 1 à 5,
caractérisé en ce qu'il comporte plusieurs accéléromètres en parallèle (15a,15b,15c), disposés proches l'un de l'autre dans ladite partie arrière (14) de l'aéronef et engendrant chacun un signal représentatif desdites accélérations latérales, lesdits signaux issus desdits accéléromètres étant adressés à un voteur (32), dont la sortie est reliée audit filtre passe-bande (18).

7. Système selon la revendication 6,
caractérisé en ce que lesdits accéléromètres (15a,15b, 15c) sont disposés l'un au-dessous de l'autre.

8. Système selon l'une quelconque des revendications 1 à 7,
caractérisé en ce qu'un dispositif de saturation (33) est prévu pour limiter le signal amplifié, issu dudit amplificateur (20) à gain variable.

**Claims**

1. A system for improving the flutter behavior of an aircraft (1) provided with a fixed wing unit (4) and with a rudder (5) which is actuated by control means (7) receiving a yaw piloting signal, said system comprising:

an accelerometer (15) disposed in the rear portion (14) of said aircraft to detect accelerations due to alternating lateral bending thereof and to generate a signal representative of said lateral accelerations;

filter means (17) receiving said signal representative of said lateral accelerations and generating a control correction signal for said rudder, which correction signal depends on the speed of said aircraft and is intended to damp said alternating lateral bending, said filter means (17) comprising:

a first filter (18) which receives said signal representative of said lateral accelerations as generated by said accelerometer (15);

a phase matching second filter (19) which receives the signal from said first filter (18);

a variable gain amplifier (20) amplifying the signal from phase matching second filter (19), the gain of said amplifier (20) being a decreasing function of the air speed (VCAS) of said aircraft; and

adder means for adding (22) said correction signal to said piloting signal; the system being characterized:

in that said first filter means (18) is of the bandpass type whose bandpass is centered about the frequency of alternating lateral bending of said rear portion (14);

in that said filter means (17) include a switch (21) transmitting the signal amplified by said amplifier (20) to said adder means (22) whenever said air speed (VCAS) of the aircraft is greater than a first threshold speed at which there is a danger of aeroelastic coupling occurring between said alternating bending of said rear portion (14) of said aircraft and the first antisymmetrical bending mode of the aircraft wing unit (4); and

in that said phase matching filter (19) being such that after passing through said control means (7) for said rudder (5), said signal amplified by said amplifier (20) is retarded by 90° relative to said signal representative of said lateral accelerations as generated by said accelerometer (15).

2. A system according to claim 1, characterized in that the gain of said amplifier (20) is a decreasing function not only of said air speed (VCAS), but also of the Mach number (M) and of the lateral acceleration of the rear fuselage said aircraft (1).

3. A system according to claim 1 or 2, characterized in that said switch (21) transmits the signal amplified by said amplifier (20) to said adder means (22) when both said air speed (VCAS) and the Mach number of the aircraft are greater respectively than said first threshold speed and a Mach number second threshold speed at which there is a danger of aeroelastic coupling occurring between said alternating bending of said rear portion (14) of said aircraft and the first antisymmetrical bending mode of the wing unit (4) thereof.

4. A system according to any one of claims 1 to 3, characterized in that the accelerometer is of the analog type and in that an anti-aliasing filter (30a, 30b, 30c) is disposed between said accelerometer and said bandpass filter (18).

5. A system according to claim 4, characterized in that an analog-to-digital converter (31a, 31b, 31c) is disposed between said anti-aliasing filter and said bandpass filter (18).

6. A system according to any one of claims 1 to 5, characterized in that it includes a plurality of accelerometers (15a, 15b, 15c) in parallel, disposed close to one another in said rear portion (14) of the aircraft and each generating a signal representative of said lateral accelerations, said signals from said accelerometers being applied to a voting circuit (32) whose output is connected to said bandpass filter (18).

7. A system according to claim 6, characterized in that said accelerometers (15a, 15b, 15c) are disposed one above the other.

8. A system according to any one of claims 1 to 7, characterized in that a saturation device (33) is provided to limit the amplified signal from said variable gain amplifier (20).

**Patentansprüche**

1. System zur Verbesserung des Flatterverhaltens eines Luftfahrzeugs (1) mit einem starren Tragwerk (4) und einem Seitenruder (5), das durch Steuermittel (7) betätigt wird, an die ein Giersteuersignal gelangt, wobei das System umfaßt:
   - einen Beschleunigungsmesser (15) im hinteren Teil (14) des Luftfahrzeugs zur Erfassung der Beschleunigungen durch den seitlichen Biegewechsel desselben und zur Erzeugung eines für die seitlichen Beschleunigungen repräsentativen Signals;
   - Filtermittel (17), an die das für die seitlichen Beschleunigungen repräsentative Signal gelangt und die ein Korrektursignal für die Steuerung des Seitenruders erzeugen, das von der Geschwindigkeit des Luftfahrzeugs abhängig und zur Dämpfung des seitlichen Biegewechsels bestimmt ist, wobei die Filtermittel (17) umfassen:
     . einen ersten Filter (18), an den das für die seitlichen Beschleunigungen repräsentative Signal gelangt, das vom Beschleunigungsmesser (15) erzeugt wurde;
     . einen zweiten Phasenanpassungsfilter (19), an den das Signal aus dem ersten Filter (18) gelangt;

. einen Verstärker (20) mit veränderlichem Verstärkungsgrad, der das Signal aus dem zweiten Phasenanpassungsfilter (19) verstärkt, wobei der Verstärkungsgrad des Verstärkers (20) eine abnehmende Funktion der aerodynamischen Geschwindigkeit (VCAS) des Luftfahrzeugs ist; und

- Mittel (22) zur Addition des Korrektursignals und des Steuersignals, dadurch gekennzeichnet:
- daß der erste Filter (18) ein Bandpaß ist, dessen Durchlaßbereich auf die Frequenz des seitlichen Biegewechsels des hinteren Teils (14) ausgerichtet ist;
- daß die Filtermittel (17) einen Schalter (21) haben, der an die Addiermittel (22) das vom Verstärker (20) verstärkte Signal überträgt, wenn die aerodynamische Geschwindigkeit (VCAS) des Luftfahrzeugs größer als eine erste Geschwindigkeitsschwelle ist, bei der eine aeroelastische Kopplung zwischen dem Biegewechsel des hinteren Teils (14) des Luftfahrzeugs und der ersten antisymmetrischen Biegeschwingung des Tragwerks (4) desselben eintreten kann, und
- daß der Phasenanpassungsfilter (19) derart ist, daß das vom Verstärker (20) verstärkte Signal nach Verlassen der Steuermittel (7) von Seitenruder (5) gegenüber dem vom Beschleunigungsmesser (15) für die seitlichen Beschleunigungen erzeugten Signal um 90° verzögert ist.

2. System nach Anspruch 1,
dadurch gekennzeichnet, daß der Verstärkungsgrad von Verstärker (20) eine abnehmende Funktion nicht nur der aerodynamischen Geschwindigkeit (VCAS), sondern auch der Machzahl (M) und der seitlichen Beschleunigung des hinteren Rumpfes des Luftfahrzeugs (1) ist.

3. System nach einem der Ansprüche 1 oder 2,
dadurch gekennzeichnet, daß der Schalter (21) das von Verstärker (20) verstärkte Signal an die Additiermittel (22) weitergibt, wenn die aerodynamische Geschwindigkeit (VCAS) und gleichzeitig die Machzahl (M) des Luftfahrzeugs größer als die erste Geschwindigkeitsschwelle bzw. eine zweite Machzahlschwelle sind, bei der eine aeroelastische Kopplung zwischen dem Biegewechsel des hinteren Teils (14) des Luftfahrzeugs und der ersten antisymmetrischen Biegeschwingung seines Tragwerks (4) eintreten können.

4. System nach einem der Ansprüche 1 bis 3,
dadurch gekennzeichnet, daß der Beschleunigungsmesser ein analoges Gerät ist, und dadurch, daß zwischen dem Beschleunigungsmesser und dem Bandpaß (18) ein Anti-Alias-Filter (30a,30b,30c) angeordnet wird.

5. System nach Anspruch 4,
dadurch gekennzeichnet, daß zwischen dem Anti-Alias-Filter und dem Bandpaß (18) ein Analog-Digitalwandler (31a,31b,31c) angeordnet wird.

6. System nach einem der Ansprüche 1 bis 5,
dadurch gekennzeichnet, daß es mehrere parallele Beschleunigungsmesser (15a,15b,15c) umfaßt, die dicht beieinander im hinteren Teil (14) des Luftfahrzeugs angeordnet sind und jeweils ein für die seitlichen Beschleunigungen repräsentatives Signal erzeugen, wobei die Signale aus den Beschleunigungsmessern an einen Voter (32) geschickt werden, dessen Ausgang mit dem Bandpaß (18) verbunden ist.

7. System nach Anspruch 6,
dadurch gekennzeichnet, daß die Beschleunigungsmesser (15a,15b,15c) untereinander angeordnet sind.

8. System nach einem der Ansprüche 1 bis 7,
dadurch gekennzeichnet, daß zur Begrenzung des verstärkten Signals aus Verstärker (20) mit veränderlichem Verstärkungsgrad eine Sättigungsvorrichtung (33) vorgesehen wird.

# FIG.1

# FIG.2

10

FIG. 3

FIG.7

11

FIG.4

FIG.5

FIG.6

FIG.9

FIG.10

FIG.8